# EUROPEAN PATENT APPLICATION

(11) **EP 2 371 209 A2**
(43) Date of publication of application: **05.10.2011**
(21) Application number: 11156540.4
(22) Date of filing: 02.03.2011
(51) Int. Cl.: A01K 1/015

(54) **Floor beam for a stable floor and a stable floor provided with such a floor beam**

(30) Priority: 31.03.2010 NL 2004491
(71) Applicant: G. van Beek & Zn. Betonindustrie B.V., 3771 MP Barneveld (NL)
(72) Inventor: van Beek, Geurt Gerardus, 3771 MK, Barneveld (NL)
(74) Representative: van Westenbrugge, Andries

(57) **Abstract**

The invention relates to a floor beam for a floor of an animal shed, in particular a calf stable, having side walls, a walking surface and a bottom surface, wherein the floor beam comprises a bearing joist (5) of concrete or wood with a top layer of rubber material in order to provide a standing surface for livestock, wherein the top layer is a profile part (6) onto which the concrete bearing joist is formed and/or which is clamped onto the wooden bearing joist (5) and which is provided with parts extending into the bearing joist, and which comprises mutually opposite corner parts (13) which extend in the longitudinal direction of the profile part and partly along the side walls.

## Description

### Background of the invention

The invention relates to a floor beam for a floor of an animal shed, in particular a calf stable or cowshed, a stable floor comprising such floor beams, and supporting beams therefor, as well as the supporting beams for this stable floor.

Dutch patent application NL 7210627 discloses floor beams provided with a rubber extruded profile with a concrete supporting beam cast onto it. The extruded profile parts are provided with a cavity which extends in the longitudinal direction. The extruded profile parts are furthermore provided with corner parts extending opposite one another in the longitudinal direction, in the description referred to as extending parts, which are embedded in the concrete. A drawback of the floor beams shown in the Dutch patent application is that when they are subjected to a load, the extending parts mentioned above become detached from the concrete beam and thus wear down, and furthermore dirt and vermin can spread between the resulting spaces and gaps. In addition, the profile parts do not extend to the end of the beams so that the corners can still be damaged. In this embodiment, extending to the end of the beams is not possible due to the cavities running in the longitudinal direction in which dirt may otherwise accumulate. Furthermore, the beams are apparently loosely placed on a manure channel element. The illustrated floor beams have been found to not be sufficiently durable in practice. In addition, the floor beams are heavy and cannot be replaced easily, and the installation is not secure. There is room for improvement with regard to the floor beams and the floor produced therewith.

European patent application 1,336,336 discloses a stable floor consisting of concrete beams which are provided with a part clamped thereto which in turn is provided with a rubber walking surface. Such a structure is expensive and can easily become damaged.

European patent application EP 2,138,289 describes a stable floor part provided with interconnected beams, which beams are provided with rubber profile parts on their walking surface. These profile parts are introduced into vibrated concrete by vibration in order to achieve good bonding. In the illustrated embodiment, three beams which are formed at a distance from one another are interconnected by means of a connecting part which is integrally cast with the beams. This results in a relatively large surface which is not covered by rubber material. In addition, these relatively large and heavy parts are difficult to replace.

### Summary of the invention

It is therefore an object of the invention to provide an improved floor beam which can easily be repaired and installed, and which is durable in use. It is a further object to improve animal welfare and to reduce emissions.

To this end, the invention provides a floor beam for a floor of an animal shed, in particular a calf stable, having side walls, a walking surface and a bottom surface, wherein the floor beam comprises a bearing joist of concrete with a top layer of rubber material in order to provide a standing surface for livestock, wherein the top layer is a profile part onto which the bearing joist is formed and which is provided with parts which extend in the concrete, and which comprises mutually opposite corner parts which extend in the longitudinal direction of the profile part and partly along the side walls and which are partly embedded in the concrete of the bearing joist and which form part of the side walls.

As a result of the rubber top layer, the livestock are more comfortable and the bearing joist is protected against damage. The floor beams in a stable floor can easily be replaced without requiring expensive hoisting equipment in the stable. As a result of the shape of the profile part, a good bond to the bearing joist is achieved. The corner part prevents contact between manure and urine and the side of the bearing joist.

In an embodiment, each of the mutually opposite corner parts has a bottom contact surface with the bearing joist transversely to the side wall, wherein the bottom contact surfaces make a downward angle with respect to the walking surface, in an embodiment, a downward angle of approximately 5-15 degrees.

In an embodiment, a bottom contact surface is present on either side of the floor beam, between the corner parts and the bearing joist, transversely to the side walls, which bottom contact surface slopes to the side walls in the position of use of the floor beam.

In an embodiment, the two bottom contact surfaces on either side of the floor beam make a mutual angle of less than 180 degrees, in an embodiment of less than 170 degrees. Due to the fact that the seams descend, any dirt or moisture which has landed in the seams runs out of the seams again.

In an embodiment, the side walls of the bearing joist taper, in an embodiment at an angle of 25-35 degrees.

In an embodiment, the side walls of the corner parts taper with respect to one another. In an embodiment, the side walls of the bearing joist taper and continue in one plane with the side walls of the bearing joist. As a result thereof, less manure and urine runs along the side walls of the bearing joist.

In an embodiment, the profile part has a convex surface, in an embodiment having a radius of curvature of approximately 30-50 cm.

In an embodiment, the transitions from the side of the corner parts which are turned towards the concrete are provided with curvatures. The curvatures prevent parts crumbling from the concrete bearing joist.

In an embodiment, the protruding bonding parts extend from the corner parts into the concrete beam, in an embodiment, the bonding parts extend in the longitudinal direction of the profile part, in a further embodiment, the bonding parts have a dovetail cross section.

In an embodiment, the bonding parts extend in an obliquely inward direction. As a result thereof, the corner parts no longer come away from the concrete. In addition, the edges of the concrete no longer crumble when subjected to point loads from hoofs.

In an embodiment, the bearing joist is made of self-sealing concrete. Thus, it is possible to achieve a smooth finish which can withstand the environment to which it is exposed. As a result of the flow properties of the self-sealing concrete, a good connection to and bond with the profile part is achieved.

In an embodiment, the bearing joist comprises a reinforcing element which extends in the longitudinal direction of the bearing joist. Such a reinforcing element may be a reinforcing iron bar.

In an embodiment, the profile part is substantially solid. This appears to offer sufficient comfort. A plane which is too resilient may cause spraining. Cavities may become receptacles for dirt. In addition, it is possible that the profile part becomes detached from the bearing joist if the profile part is pushed in too much.

In an embodiment, the profile part is made of rubber or silicone rubber or elastomer. Preferably, a relatively hard kind of these materials is chosen. It has been found, in practice, that rubber is most resistant when subjected to the heavy load from the hoofs of the livestock and the aggressive urine.

In an embodiment, the profile part is an extruded profile part. Alternatively, the profile part may be produced by means of injection-moulding. In a further embodiment, the profile part is solid.

The invention furthermore relates to a floor beam for a floor of an animal shed, in particular a calf stable, having side walls, a walking surface and a bottom surface, wherein the floor beam comprises a wooden bearing joist with a top layer of rubber material in order to provide a standing surface for livestock, wherein the top layer is a profile part which is clamped onto the wooden bearing joist and which is provided with parts extending into the wood, and which comprises mutually opposite corner parts which extend in the longitudinal direction of the profile part and partly along the side walls and which are partly embedded in the wood of the bearing joist and which form part of the side walls.

The improved floor beam which is simple to produce increases the comfort of the livestock. In addition, the surface of the bearing joists is protected against wear.

In an embodiment, the wooden bearing joist comprises a dovetail profile milled in the longitudinal direction on the side of the profile part.

In an embodiment, the profile part is clamped onto the wooden bearing joist, in particular it surrounds the milled dovetail profile of the wooden bearing joist in a clamping manner. To this end, the distance between the corner parts 12 on the inner side 23 is slightly smaller than the local width of the wooden bearing joist.

In an embodiment, the profile part has a convex surface, in an embodiment having a radius of curvature of approximately 15-40 cm. As a result thereof, the manure quickly runs off the surface and into the manure cellar or manure channel, which results in a reduced emission.

In an embodiment, a bottom contact surface is provided on either side of the floor beam, between the corner parts and the bearing joist, transversely to the side walls, which bottom contact surface slopes to the side walls in the position of use of the floor beam.

In an embodiment, the two bottom contact surfaces on either side of the floor beam are at a mutual angle of less than 180 degrees, in an embodiment less than 170 degrees. As a result thereof, moisture and urine and other dirt run quickly from the seam between the profile part and the bearing joist or are pressed out of the latter.

In an embodiment, a bottom contact surface is present on either side of the floor beam, between the corner parts and the bearing joist, transversely to the side walls, which bottom contact surface slopes to the side walls in the position of use of the floor beam, wherein each of the corner parts of the profile part has a bottom contact surface and the wooden bearing joist has contact surfaces contacting the latter, wherein the bottom contact surfaces of the profile part have a larger downward incline than the contact surfaces of the wooden bearing joist.

The invention furthermore relates to a stable floor comprising floor beams as described in this description, resting at a mutual distance from one another and mutually substantially parallel on supporting beams extending transversely across a manure cellar.

In an embodiment of this stable floor, the ends of the floor beams rest on the supporting beams, and wherein the supporting beams are provided with a tapering upper edge which is provided with tapering indentations in which the floor beams are held.

The invention furthermore relates to supporting beams, obviously intended and suitable as supporting beams for the above-described stable floor, comprising a beam of self-sealing concrete and provided with a tapering upper edge which is provided with inwardly tapering indentations.

Due to the shape, the supporting beams offer minimal resistance to the urine and manure running into the manure cellar.

The invention furthermore relates to a device provided with one or more of the characterizing measures described in the attached description and/or illustrated in the attached drawings.

It will be clear that the various aspects mentioned in the present patent application can be combined and may each be considered individually for a divisional patent application.

### Brief description of the figures

The attached figures show an embodiment of a floor beam and a stable floor provided with such a floor beam, in which:
Fig. 1 shows a perspective view of a stable floor provided with floor beams according to an embodiment of the invention;
Fig. 2 shows a cross section of a floor beam with a profile part provided with a concrete bearing joist formed thereon;
Fig. 3 shows a cross section of a floor beam comprising a wooden bearing joist provided with a profile part clamped thereto.

### Description of embodiments

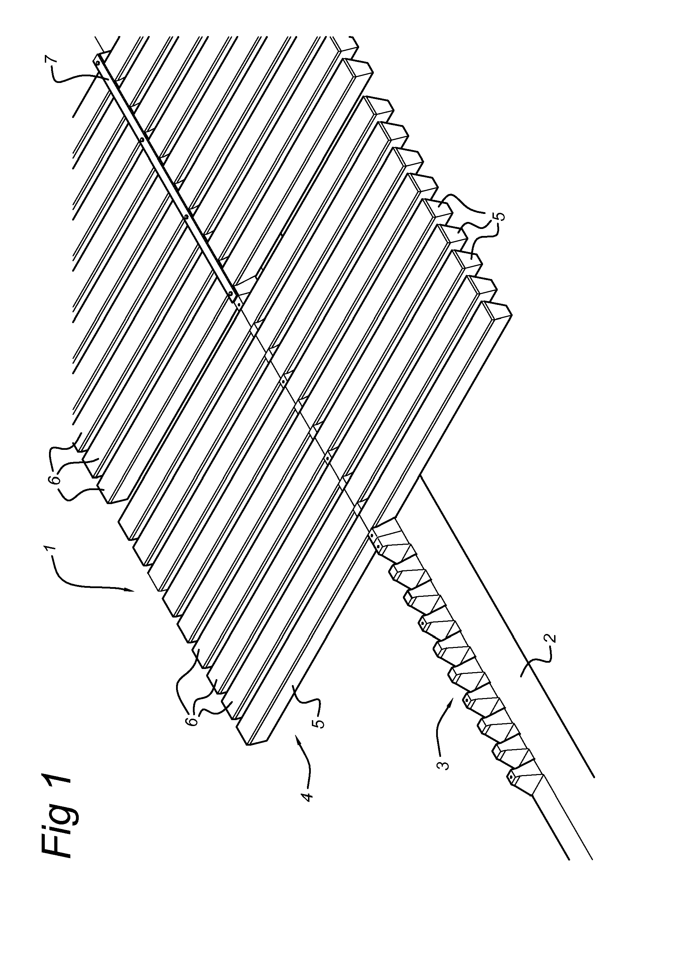

Fig. 1 shows a stable floor 1 in which a supporting beam 2 extends transversely across a manure cellar. This supporting beam 2 is provided with receiving parts 3 which in this case taper. The supporting beam 2 is partly provided with floor beams 4. The floor beams 4 have a bearing joist 5 and are provided with a rubber top layer. The rubber top layer is provided by means of a profile part 6. In order to secure the floor beams 4, a strip 7, in this case a stainless steel strip, may be provided across the ends thereof and be attached to the supporting beam 2. The supporting beam 2 may, for example, be cast from self-sealing concrete, as will be explained below. On the upper side, the self-sealing concrete may be provided with cast-in screwed sleeves into which bolts can be screwed so that the strips 7 can be secured and fixed to the supporting beam 2. In order to prevent a blockage from occurring in the discharge of manure through the spaces between the floor beams, the supporting beam 2 furthermore tapers in its longitudinal direction on the top side, as is illustrated in Fig. 1. Usually, the floor beams 4 will have a width of approximately 6 to 10 cm for wooden beams and a width of approximately 8 to 15 cm for concrete bearing joists.

Due to the fact that the stable floor 1 is only provided with supporting beams 2 which extend transversely across the manure channel or manure cellar and floor beams 4 which extend in the longitudinal direction of the manure cellar or manure channel, the intermediate spaces between the bearing joists 4 also extend in the longitudinal direction of the manure channel. As a result thereof, it is much more pleasant for a calf or cow or other livestock to stand on this floor, since the intermediate spaces generally extend transversely to the livestock and not, as was customary until now, in the longitudinal direction of the livestock. In addition, since the floor beams are only supported by the supporting beam 2 at their ends, the opening for draining manure and urine is as large as possible.

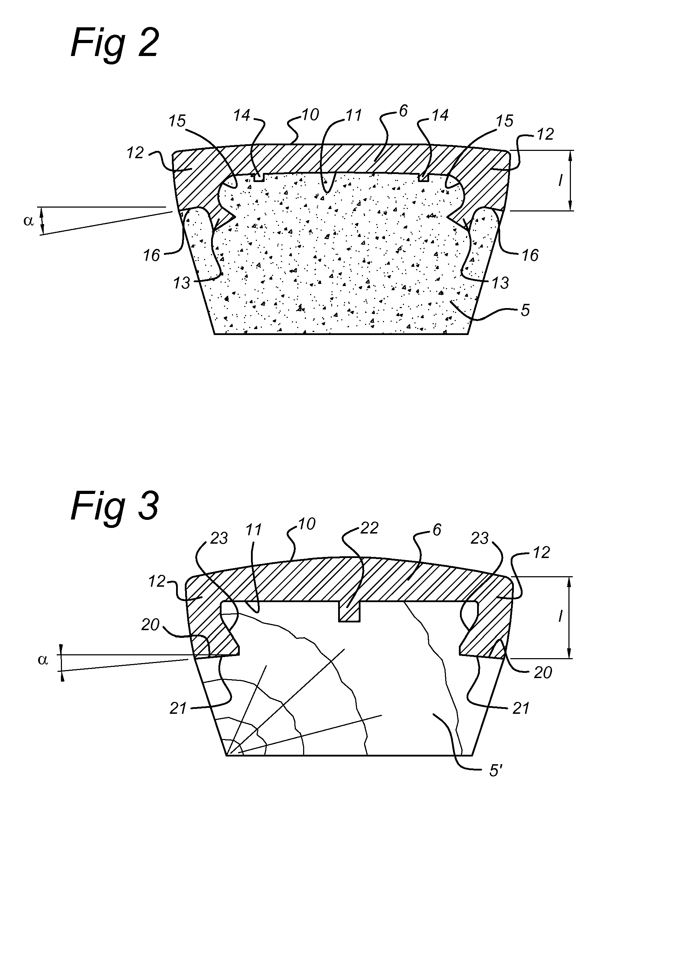

Fig. 2 shows a cross section through a floor beam 4 for a floor of an animal shed, in particular a calf stable. The illustrated floor beam 4 from Fig. 2 has a concrete bearing joist 5 which is provided with reinforcement parts extending in the longitudinal direction. On the upper side, this bearing joist 5 is provided with a profile part 6. Profile part 6 has an upper surface 10 which provides a walking surface or standing surface for the livestock. The profile part 6 furthermore has a bottom surface 11 which is in contact with the concrete bearing joist 5. Profile part 6 furthermore has mutually opposite corner parts 12 which extend in the longitudinal direction. The corner parts 12 extend downwards and thus form part of the side walls of the floor beam. In this embodiment, the side walls of the floor beam taper and the corner parts 12 are provided with lateral surfaces which extend in line with these tapering walls. In addition, the corner parts 12 are partly embedded in the concrete of the bearing joist 5. The corner parts 12 are furthermore provided with bonding parts 13 and 13'. These bonding parts have a dovetail cross section. Moreover, these bonding parts 13, 13' are formed on the parts of the corner parts 12 of profile part 6 which are situated or embedded in the concrete. In particular, these bonding parts 13, 13' are directed inwardly and face the beam. In an embodiment as illustrated in Fig. 2, the bonding parts extend obliquely in an inward direction. In particular, they extend along lines which intersect in the beam. As a result of these bonding parts, in particular by their shape and more particularly by the alignment thereof in the bearing joist 5 and with respect to one another, the profile parts will not become detached from the concrete bearing joist when the livestock exerts pressure on the upper side thereof, as a result of which the rubber of profile part 6 is pushed in. In order to further improve the bonding, in particular when the standing surface 10 is subjected to a load, the bottom side 11 of profile part 6 is furthermore provided with protruding parts 14, 14' which extend in the concrete of bearing joist 5. This prevents further detachment of the corner parts 12 of the concrete bearing joist.

Furthermore, the transition from the bottom surface 11 to the corner parts 12 is curved, as a result of which the concrete can readily run into these curved parts 15 when it is being cast.

The corner parts 12 of profile part 6 furthermore have a bottom surface 16 which bears against and absorbs pressure from contact surface 17 of the concrete beam. In this embodiment, the contact surface makes an angle α as indicated in Fig. 2, with a line which connects the corner parts to one another. Due to this angle α which, in practice, will be approximately 5 to 15°, any moisture which may seep between the boundary surface is readily pressed out again when livestock exerts pressure on the standing surface 10. The contact surface has a seam. These seams run downwards towards the side walls. If any dirt or moisture should end up therein, it will be removed and/or pushed out the latter again as a result of the sloping direction.

Furthermore, it can clearly be seen in Fig. 2 that the standing surface 10 of profile part 6 has a curved or convex surface 10, viewed in cross section. As a result thereof, manure and urine readily runs off the profile part 6.

The floor beam from Fig. 2 is produced by placing a profile part 6 in a mould and then pouring self-sealing concrete into the mould. If desired, a mould can also be filled with self-sealing concrete and profile part 6 is laid on top thereof. However, it is preferred to pour the concrete on the profile part, as a result of which any air inclusions between the concrete and profile part 6 are prevented.

Fig. 3 shows an alternative embodiment of a floor beam 4. In this embodiment, the bearing joist 5' is not made of concrete, but of wood. Compared to concrete, such a floor beam 4 has the advantage that it is lighter and easier to handle. In this embodiment, a profile part 6 is clamped onto the wood of the bearing joist 5'. By means of the corner parts 12 which run inwards on the inner surface 23, a clamping action will be produced on the wooden bearing joist 5' if this angle is made to be slightly smaller than the milled angle on the wooden bearing joist. The upper side of the bearing joist 5' is made in the shape of a dovetail. The profile part 6 is furthermore provided, on the lower side 11 which bears against and/or rests on the wooden bearing joist 5, with a part 22 extending into the wood. When a load is exerted on the standing surface 10, this part will help to prevent the corner parts 12 from becoming detached from the wooden bearing joist 5'. It will be clear that the distance between the corner parts 12 will be chosen to be slightly smaller than the distance between the milled indentations on the wooden bearing joist, as a result of which corner part 6 clamps onto the wooden bearing joist.

However, a certain slit will occur in the contact surface which is denoted by reference numeral 20, which is the contact surface of profile part 6, and contact surface 22, which is the contact surface of the wooden bearing joist, due to the pressure on the standing surface 10. In order to prevent moisture from penetrating therein, leading to the growth of bacteria and thus possibly to rotting or infection of animals, the contact surface 20 is arranged at an angle a with respect to a connecting line L and is thus directed downwards. The contact surface 21 of the bearing joist is also arranged at an angle with respect to this connecting line, as a result of which moisture will drain away in a downward direction. In order to ensure a good seal, the angle α of profile part 6 will be greater than the angle which the contact surface 21 makes with respect to the line 1. The fitting of profile part 6 will cause a pressure effect on the beam. In addition, when livestock exerts pressure on the standing surface 10, moisture and possibly dirt will be pushed out of this contact seam. Furthermore, it can be seen that the wooden bearing joist also has tapering side walls, which tapering continues with the side walls of corner parts 12. As a result thereof, manure readily runs off the standing surface and will contact the side walls as little as possible. In general, as has already been stated above, the wooden floor beam will be narrower than the concrete floor beam. The wooden floor beam will generally be approximately 7-15 cm wide. The concrete floor beam will generally be approximately 8-15 cm wide.

In the embodiments from Figs. 2 and 3, the corner parts 12, having a height 1, run slightly straighter than the tapering side walls of the bearing joists 5 and 5'. However, in an embodiment these side walls of corner parts 12 continue in the same direction and taper as the side walls of the bearing joists 5, 5'. As a result thereof, manure and urine have even less chance of coming into contact with the sides of the bearing joists 5, 5'.

In an embodiment, profile part 6 will be made of rubber. Rubber has the advantage that it feels comfortable to animals and is inexpensive to produce. Alternatively, the profile parts may be made from a rubber-like plastic, for example an elastomer or a silicone rubber, although a less flexible type thereof will have to be chosen in order to ensure a sufficient degree of durability.

The self-sealing concrete of the bearing joist 5 from Fig. 2 often comprises cement, a filler, such as for example fly ash or limestone flour. In addition, a plasticizer is added. In an embodiment, the plasticizer is a polycarboxylate, resulting in what is referred to as a third-generation self-sealing concrete. Such a concrete is particularly suitable in this floor beam 4 and the supporting beams 2 since the urine and manure have relatively little effect, due to the smooth and dense surface. Below follows an example of a recipe for self-sealing concrete:

| | |
|---|---|
| Cement I 52.5 380 | kg per cubic metre |
| Limestone flour 240 | kg per cubic metre |
| Sand 0-4mm 732 | kg per cubic metre |
| Gravel 4-16mm 867 | kg per cubic metre |
| Additive ZvB 6.77 | kg per cubic metre |

It will be clear that the above description has been given in order to illustrate the functioning of preferred embodiments of the invention, and not in order to limit the scope of the invention. On the basis of the above explanation, many variations which fall within the spirit and scope of the present invention will be obvious to a person skilled in the art.

## Claims

1. Floor beam for a floor of an animal shed, in particular a calf stable, having side walls, a walking surface and a bottom surface, wherein the floor beam comprises a bearing joist of concrete with a top layer of rubber material in order to provide a standing surface for livestock, wherein the top layer is a profile part onto which the bearing joist is formed and which is provided with parts which extend in the concrete, and which comprises mutually opposite corner parts which extend in the longitudinal direction of the profile part and partly along the side walls and which are partly embedded in the concrete of the bearing joist and which form part of the side walls.

2. Floor beam according to Claim 1, wherein each of the mutually opposite corner parts has a bottom contact surface with the bearing joist transversely to the side wall, wherein the bottom contact surfaces make a downward angle with respect to the walking surface, in an embodiment, a downward angle of approximately 5-15 degrees.

3. Floor beam according to Claim 1 or 2, wherein a bottom contact surface is present on either side of the floor beam, between the corner parts and the bearing joist, transversely to the side walls, which bottom contact surface slopes to the side walls in the position of use of the floor beam.

4. Floor beam according to one of the preceding claims, wherein the two bottom contact surfaces on either side of the floor beam make a mutual angle of less than 180 degrees, in an embodiment less than 170 degrees.

5. Floor beam according to one of the preceding claims, wherein the side walls of the bearing joist taper, in an embodiment at an angle of 25-35 degrees.

6. Floor beam according to one of the preceding claims, wherein the side walls of the corner parts taper with respect to one another, in an embodiment wherein the side walls of the bearing joist taper and continue in one plane with the side walls of the bearing joist.

7. Floor beam according to one of the preceding claims, wherein the profile part has a convex surface, in an embodiment having a radius of curvature of approximately 30-50 cm.

8. Floor beam according to one of the preceding claims, wherein the transitions from the side of the corner parts which are turned towards the concrete are provided with curvatures.

9. Floor beam according to one of the preceding claims, wherein the protruding bonding parts extend from the corner parts into the concrete beam, in an embodiment, the bonding parts extend in the longitudinal direction of the profile part, in a further embodiment, the bonding parts have a dovetail cross section.

10. Floor beam according to one of the preceding claims, wherein the bonding parts extend in an obliquely inward direction.

11. Floor beam according to one of the preceding claims, wherein the bearing joist is made of self-sealing concrete.

12. Floor beam according to one of the preceding claims, wherein the bearing joist comprises a reinforcing element which extends in the longitudinal direction of the bearing joist.

13. Floor beam according to one of the preceding claims, wherein the profile part is substantially solid.

14. Floor beam according to one of the preceding claims, wherein the profile part is made of rubber or silicone rubber or elastomer.

15. Floor beam according to one of the preceding claims, wherein the profile part is an extruded profile part.

16. Floor beam for a floor of an animal shed, in particular a calf stable, having side walls, a walking surface and a bottom surface, wherein the floor beam comprises a wooden bearing joist with a top layer of rubber material in order to provide a standing surface for livestock, wherein the top layer is a profile part which is clamped onto the wooden bearing joist and which is provided with parts extending into the wood, and which comprises mutually opposite corner parts which extend in the longitudinal direction of the profile part and partly along the side walls and which are partly embedded in the wood of the bearing joist and which form part of the side walls.

17. Floor beam according to Claim 16, wherein the wooden bearing joist comprises a dovetail profile milled in the longitudinal direction on the side of the profile part.

18. Floor beam according to Claim 16 or 17, wherein the profile part is clamped onto the wooden bearing joist, in particular it surrounds the milled dovetail profile of the wooden bearing joist in a clamping manner.

19. Floor beam according to one of the preceding Claims 16-18, wherein the profile part has a convex surface, in an embodiment having a radius of curvature of approximately 15-40 cm.

20. Floor beam according to one of the preceding Claims 16-19, wherein a bottom contact surface is provided on either side of the floor beam, between the corner parts and the bearing joist, transversely to the side walls, which bottom contact surface slopes to the side walls in the position of use of the floor beam.

21. Floor beam according to one of the preceding Claims 16-20, wherein the two bottom contact surfaces on either side of the floor beam are at a mutual angle of less than 180 degrees, in an embodiment less than 170 degrees.

22. Floor beam according to one of the preceding Claims 16-20, wherein a bottom contact surface is present on either side of the floor beam, between the corner parts and the bearing joist, transversely to the side walls, which bottom contact surface slopes to the side walls in the position of use of the floor beam, wherein each of the corner parts of the profile part has a bottom contact surface and the wooden bearing joist has contact surfaces contacting the latter, wherein the bottom contact surfaces of the profile part have a larger downward incline than the contact surfaces of the wooden bearing joist.

23. Stable floor comprising floor beams according to one of the preceding claims, resting at a mutual distance from one another and mutually substantially parallel on supporting beams extending transversely across a manure cellar.

24. Stable floor according to Claim 23, wherein the ends of the floor beams rest on the supporting beams, and wherein the supporting beams are provided with a tapering upper edge which is provided with tapering indentations in which the floor beams are held.

25. Supporting beams, obviously intended and suitable as supporting beams for the stable floor according to one of the preceding claims, comprising a beam of self sealing concrete and provided with a tapering upper edge which is provided with inwardly tapering indentations.
